# EUROPÄISCHE PATENTSCHRIFT

(11) **EP 2 642 090 B1**
(45) Veröffentlichungstag und Bekanntmachung des Hinweises auf die Patenterteilung: **27.04.2016**
(21) Anmeldenummer: 13156621.8
(22) Anmeldetag: 25.02.2013
(51) Int. Cl.: F01K 13/02, F01D 17/08, F01D 25/00, F01K 7/34, F01K 7/38, F02C 9/18

(54) **Verfahren zum Betrieb einer Dampfturbine und assoziiertes Steuer- oder Regelungssystem**
Method for operating a steam turbine and control unit therefore
Procédé de fonctionnement d'une turbine à vapeur et système de contrôle associé

(30) Priorität: 19.03.2012 DE 102012204288
(43) Veröffentlichungstag der Anmeldung: 25.09.2013
(73) Patentinhaber: MAN Diesel & Turbo SE, 86153 Augsburg (DE)
(72) Erfinder: Holldack, Carsten, 46485 Wesel (DE); Bösch, Heinz-Hugo, 21244 Buchholz (DE)

(56) Entgegenhaltungen:
- EP-A2- 2 345 795
- JP-A- H11 280 408
- JP-A- 2004 169 621
- JP-A- 2008 075 526

## Beschreibung

Die Erfindung betrifft ein Verfahren zum Betrieb einer Dampfturbine in schwachen und/oder schwankenden Lastbereichen eines Dampf erzeugenden Kraftwerks mit mindestens einer Reaktionsstufe und mindestens einem nachgelagerten Endstufenmodul, eine solche Dampfturbine sowie eine Steuer- oder Regeleinrichtung zur Durchführung eines solchen Verfahrens.

Dampfturbinen werden unter anderem zur Energieumwandlung in Verbrennungskraftwerken eingesetzt, insbesondere bei der Biomasse-, Reststoff- und Müllverbrennung. Die bei solchen Anwendungen erzielbaren hohen Vergütungen haben zu einer deutlichen Steigerung der Effizienz der eingesetzten Maschinen geführt, die jedoch empfindlichere, weniger robuste Konstruktionen bedingen. So werden beispielsweise bei den Endschaufelmodulen häufig deutlich längere Endstufenschaufeln eingesetzt, die Spaltabdichtungen sind optimiert, und es werden für Volllast optimierte Profile bei den Laufschaufeln der Reaktionsstufen eingesetzt.

Als Folge ergibt sich ein deutlich eingeschränkter Betriebsbereich der Dampfturbine, diese kann in der Regel nur noch bei Dampfzuständen, gekennzeichnet durch Frischdampftemperatur, -druck und Abdampffeuchte, betrieben werden, die relativ nahe am wirkungsgradoptimierten Auslegungspunkt sind.

Bei den vorgenannten Anwendungen kann dieser eingeschränkte Betriebsbereich allerdings in Fällen des Schwachlastbetriebs und insbesondere der sogenannten Insellast zu Problemen führen. Im Normalbetrieb fährt das Kraftwerk mit Nennlast, hierbei liefert der Dampferzeuger des Kraftwerkes die maximale Dampfmenge und die Dampfturbine setzt diese thermische Leistung in mechanische Leistung um.

Der Abdampf der Dampfturbine wird mit großem Volumenstrom und entsprechend geringer verbleibender thermischer Energie dem Kondensator zugeführt, der diese wiederum an die Umgebung abführt um den Dampf vollständig zu kondensieren, damit dieser wieder mittels einer Kesselspeisepumpe dem Dampferzeuger des Kraftwerks zugeführt werden kann. Bei Fällen der Insellast wird das Kraftwerk, bzw. der mit der Dampfturbine verbundene Generator, an der Einspeisestelle vom externen Stromnetz abgetrennt und es muss nur noch der Eigenenergiebedarf des Kraftwerkes (Motoren, Beleuchtung, Pumpen, EDV etc.) gedeckt werden. Gegenüber der Nennleistung ist die hierzu benötigte Leistung nur ein Bruchteil davon und ein nicht unerheblicher Teil des im Kraftwerk erzeugten Dampfes wird, unter Umgehung der Dampfturbine, direkt dem Kondensator zugeführt, so dass diesem eine, gegenüber dem Betrieb bei Nennlast, deutlich größere thermische Energie und Dampfmenge zugeführt wird. Da dieser überschüssige Dampf nicht mehr in der Turbine entspannt bzw. in mechanische Energie umgesetzt wird, führt dies zu einem Anstieg des Kondensatordruckes. Abgesehen von zu vernachlässigenden Leitungsverlusten ist der Kondensatordruck im eingangs beschriebenen Insellastfall nahezu gleich dem Abdampfdruck der Turbine und dies führt zu einer starken Reduktion des Volumenstroms im Bereich des Endstufenmoduls der Dampfturbine. Diese Reduktion des Volumenstroms führt zu einer deutlich höheren Belastung des Endstufenmoduls durch Ablösungen der Strömung von der Nabe der Dampfturbinenwelle. Diese Ablösungen regen die Schaufeln zu ungewollten verstärkten Schwingungen an, die aufgrund der in diesem Betriebsbereich hohen Dampfkräfte eine starke mechanische Belastung des Endstufenmoduls verursachen, die mit einem hohen Lebensdauerverbrauch einhergeht. Erst im Bereich kleinerer Volumen- bzw. Massenströme des direkt dem Kondensator zugeführten Dampfes würde die Belastung wieder sinken. Allerdings fehlt es den Dampfturbinen im Stand der Technik an geeigneten Regelungsmechanismen zur prozesssicheren Führung des Dampfstromes bei schwankenden Lastbereichen, insbesondere in Fällen der eingangs beschriebenen Insellast.

Im Stand der Technik sind zahlreiche Lösungsansätze zur Verbesserung des Betriebs von Dampfturbinen bei Anfahrvorgängen, Überlast, Lastwechseln und zur Regelung der Wärmeversorgung durch Heizkraftwerke bekannt.

Die DE 10 2008 029 941 B4 beschreibt ein Verfahren, das unter anderem eine Teilstrom-Bypass-Leitung zur Leistungsregelung der Dampfkraftanlage enthält, somit kann deren Nettoleistung durch Schließen der Bypass-Leitung im Bedarfsfall zur Frequenzstützung erhöht werden.

In der DE 10 2009 026 053 A1 wird eine Turbine mit einer Reservekapazität zur Erzeugung von Leistung über die nominelle Kapazität bzw. Nennleistung hinaus beschrieben, gesteuert über ein Bypass-Überlastventil zwischen der Dampfzuführleitung und der Zwischenüberhitzungsstelle vor dem Zwischenüberhitzer.

Eine Bypass-Leitung zur Steuerung des Heißdampfes für die Wärmeversorgung ist in der DD 147 145 beschrieben, hierbei werden über ein Entnahmediagramm die für die Voll- bzw. Teillast und der für die Wärmeversorgung benötigte Dampf bedarfsgerecht geregelt.

Die JP2004169621 A zeigt ein Betriebsverfahren für eine Dampfturbine mit Bypass-Regelung, welches den nächstliegenden Stand der Technik für die vorliegende Erfindung darstellt.

Der vorgenannte Stand der Technik zeigt somit verschiedenste Anordnungen zur bedarfsgerechten Entnahme von Teildampfmengen, allerdings beheben alle vorgenannten Anordnungen nicht oder nur teilweise das Problem der auf das Endstufenmodul wirkenden hohen Abdampfdrücke bei schwachen und/oder schwankenden Lastbereichen. Aus diesem Grund konnte im Stand der Technik das Endstufenmodul bisher einerseits nur dadurch geschützt werden, dass ab einem bestimmten Druck die Turbine zwangsabgeschaltet wird (Trip) und das Kraftwerk somit allerdings auch ohne Eigenversorgung ist. Dieser Ausfall der Eigenversorgung wird allerdings von vielen Kraftwerksbetreibern nicht akzeptiert und es wird vielmehr der störungsfreie Betrieb auch im Falle von schwachen oder schwankenden Lastbereichen vertraglich eingefordert. Ermöglicht werden kann ein solcher störungsfreier Betrieb im Stand der Technik andererseits auch durch Einsatz von verstärkten Endschaufeln in den Endstufenmodulen; allerdings haben solche verstärkten Endschaufeln, bedingt durch deren Aerodynamik, bei gleicher Abströmfläche einen schlechteren Wirkungsgrad gegenüber den nicht verstärkten Schaufeln. Zudem sind solche Endschaufeln in Folge des höheren Material- und Zerspanungsaufwandes teurer und verursachen durch ihre größere Sehnenlänge auch eine größere axiale Beschaufelungslänge, was sich negativ auf die Rotordynamik auswirkt.
Aufgabe der vorliegenden Erfindung ist es daher, auch bei schwachen und/oder schwankenden Lastbereichen eines Kraftwerks, insbesondere im Falle der vorgenannt beschriebenen Insellast die Dampfturbine, eine für Voll- bzw. Nennlast hocheffizient ausgelegte Dampfturbine sicher betreiben zu können.

Diese Aufgabe wird durch ein Verfahren mit den Merkmalen des Anspruchs 1 gelöst.

Anspruch 4 schützt eine Steuer- bzw. Regeleinrichtung zur Durchführung des Verfahrens. Die Unteransprüche betreffen vorteilhafte Weiterbildungen.

Das erfindungsgemäße Verfahren ermöglicht in vorteilhafter Weise den unbegrenzten Betrieb des Endstufenmoduls einer Dampfturbine bei schwachen und/oder schwankenden Lastbereichen, so dass eine sofortige oder kurzfristige Zwangsabschaltung (Trip) der Dampfturbine verhindert wird. Die Dampfturbine bleibt dabei unverändert, was die wirkungsgradoptimierte Auslegung von Dampfturbinen für den Voll- bzw. Nennlastbereich vereinfacht. Zudem bleiben die standardmäßigen Regel-, Schutz- und Überwachungssysteme der Dampfturbine grundsätzlich unverändert und werden durch das neue Verfahren derart ergänzt, dass das Endstufenmodul stets in erlaubten Bereichen bleibt. Die vorgenannten Veränderungen bieten Potential zur Nachrüstung von bestehenden Anlagen, was wirtschaftlichen Aspekten entgegenkommt.

Eine Dampfturbine ist ein wesentlicher Bestandteil eines Kraftwerkes und setzt die vom Dampferzeuger gelieferte thermische Leistung in mechanische Leistung für einen Generator um, so dass dieser elektrische Energie zur Einspeisung in das externe sowie interne Stromnetz erzeugt. Die Dampfturbine weist allgemein mindestens eine Reaktionsstufe auf, in der Frischdampf mit höherem Druck eintritt, und mindestens ein Endstufenmodul, in das Dampf mit niedrigerem Druck eintritt. Gleichwohl ist die vorliegende Erfindung nicht hierauf beschränkt, sondern bezieht sich beispielsweise auch auf einen stromaufwärtigen Hochdruckteil, in den der Dampf mit höherem Druck eintritt, und einen stromabwärtigen Niederdruckteil, in den der Dampf mit niedrigerem Druck entweder aus dem Hochdruckteil oder einem zwischen Hoch- und Niederdruckteil angeordneten weiteren Turbinenteil eintritt. Sowohl Hoch-, Mittel-, als auch der Niederdruckteil können die eingangs beschriebene Anordnung von Reaktionsstufen und Endstufenmodul enthalten, hier sind kompakte gemeinsame und/oder getrennte Baueinheiten denkbar. Insofern bezieht sich auch der Begriff "Frischdampf" allgemein auf den Dampf, der in die mindestens eine Reaktionsstufe eintritt, "Abdampf" auf den Teil, der aus dem Endstufenmodul austritt. Dabei kann es sich also um den der Dampfturbine als Ganzes zugeführten bzw. aus dieser abgeführten Frisch- bzw. Abdampf handeln, aber auch um Frisch- bzw. Abdampf, wie er in einzelnen Turbinenstufen anfällt.

Erfindungsgemäß wird nun, abhängig vom Druckniveau, nach oder vorzugsweise vor einer Reaktionsstufe der Dampfturbine eine Teildampfmenge entnommen und über eine zusätzliche Rohrleitung in die Abdampfleitung und/oder den Kondensator geführt, dabei erfährt die Teildampfmenge im Wesentlichen eine isenthalpe Entspannung. Dadurch sinkt der Volumen- bzw. Massenstrom im nachfolgenden Teil der Dampfturbine, die Belastungsgrenzen insbesondere für die Endstufenmodule werden nicht erreicht und die Dampfturbine kann sicher "unterkritisch" betrieben werden. Die Regelung für dieses Verfahren erfolgt über ein in der Turbinensteuerung abgebildetes Diagramm, in dem ein Sperrbereich für den Druck an der Anzapf- bzw. Entnahmestelle nach einer Reaktionsstufe über dem Abdampfdruck hinterlegt ist. Realisiert wird die Regelung über ein von der Turbinensteuerung angesteuertes Drosselventil, somit wird das gezielte Einstellen des zum sicheren Betrieb erforderlichen Volumen- bzw. Massestromes ermöglicht.

Um diese Regelung bzw. Steuerung durchzuführen, sind in einer Dampfturbine nach einer Ausführung der vorliegenden Erfindung ein oder mehrere Temperatur- und/oder Drucksensoren im Bereich der Reaktionsstufen, vorzugsweise danach, mit einer Steuer- bzw. Regeleinrichtung verbunden, die den Massen- bzw. Volumenstrom der entnommenen Teildampfmenge steuert bzw. regelt.

Da die Erfindung den wirkungsgradoptimierten Betrieb einer Dampfturbine bei Voll- bzw. Nennlast und darüber hinaus auch den sicheren Betrieb der Dampfturbine bei schwankenden Lastfällen gewährleisten soll, wird das erfindungsgemäße Verfahren besonders den Anforderungen von nicht primär der Stromerzeugung dienenden Kraftwerksanlagen, beispielsweise Müllverbrennungsanlagen, gerecht. Da das Ziel solcher Anlagen nicht primär die Stromerzeugung für das externe Stromnetz ist, werden diese bei niedrigerem Strombedarf im regionalen Stromnetz eher vom Netz genommen als reine Kraftwerksanlagen zur Stromerzeugung. In solchen Fällen wird beispielsweise das Müllverbrennungskraftwerk vom Netz genommen und es erfolgt nur noch eine Stromerzeugung für den internen Bedarf der Anlage, somit muss die Dampfturbine weniger mechanische Energie für den Strom erzeugenden Generator erzeugen und die Beaufschlagung der Dampfturbine mit Dampf fällt geringer aus.

Dem gegenüber steht allerdings das Ziel der Müllverbrennungsanlage, nach wie vor große Mengen an Müll zu verbrennen, so dass das Ziel seiner Entsorgung erreicht wird, und demnach steht der Voll- bzw. Nennlastbetrieb dieser Anlage im Vordergrund sowie damit verbunden erfolgt eine optimale Auslegung der Dampfturbine vorzugsweise auch für deren Voll- bzw. Nennlast.

Die Insellast, als extremer Fall der schwankenden Lasten, ist somit nicht vordergründig für die wirkungsgradoptimierte Auslegung der Dampfturbine von Interesse, so dass entnommene Teildampfmengen zwar kurzfristig den Wirkungsgrad hinsichtlich der energetischen Verwertung der Dampfmengen mindern, aber in der Gesamtbetrachtung des Prozesses und der Maschinenkomponenten vernachlässigbar ist.

Weitere Vorteile und Merkmale ergeben sich aus den Unteransprüchen und dem Ausführungsbeispiel.

Hierzu schematisiert:

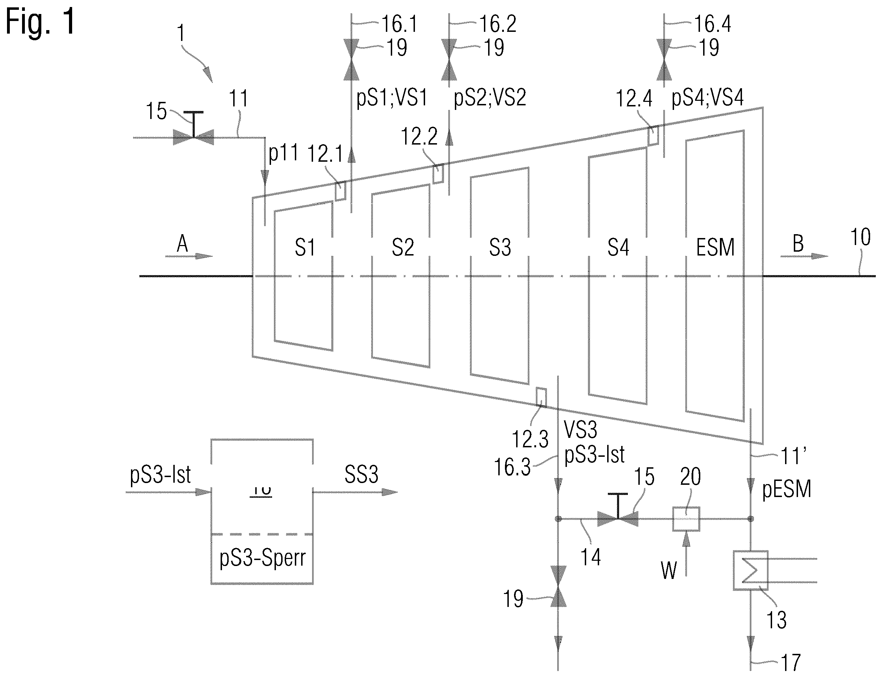

- Fig. 1: eine Darstellung einer Dampfturbine nach einer Ausführung der vorliegenden Erfindung;
- Fig. 2: eine beispielhafte Darstellung von Wechselspannungsamplituden über dem Volumenstrom;

Obwohl nicht dargestellt, können stromaufwärts vor der ersten Reaktionsstufe (S1), stromabwärts nach dem Endstufenmodul (ESM) und/oder zwischen den Reaktionsstufen (S1, S2, S3, S4) weitere Turbinenteile angeordnet sein.

Der in einem nicht dargestellten Kraftwerk erzeugte Dampf (11) wird, wie durch Pfeile (A, B) angedeutet, mit höherem Druck (p11) den Reaktionsstufen (S1, S2, S3, S4) zugeführt, dort unter Abgabe mechanischer Arbeit an die Welle (10) der Dampfturbine (1) entspannt und anschließend dem Endstufenmodul (ESM) zugeführt, wo er unter weiterer Entspannung auf einen niedrigeren Druck (pESM) ebenfalls mechanische Arbeit an die Welle (10) der Dampfturbine (1) abgibt. Im Ausführungsbeispiel befinden sich die in Reihe angeordneten Reaktionsstufen (S1-S4) auf einer gemeinsamen Welle (10) mit dem Endstufenmodul (ESM), es sind aber auch unterschiedliche Wellen für sämtliche oder Teile der Reaktionsstufen (S1, S2, S3, S4) und das Endstufenmodul (ESM) denkbar. Ebenfalls sind Anordnungen unterteilt in mehreren Hoch-, Mittel-, oder Niederdruckstufen denkbar.

An einer Entnahmestelle, die sich gemäß diesem Ausführungsbeispiel nach der dritten Reaktionsstufe (S3) befindet, wird der Dampfturbine (1) eine Teildampfmenge (VS3) entnommen und über eine zusätzliche Rohrleitung (14), unter Umgehung des Endstufenmoduls (ESM), in den Abdampfstrom (11') der Dampfturbine (1) und/oder in den Kondensator (13) geführt. Falls die entnommene Teildampfmenge (VS3) zu heiß für den Kondensator (13) ist, kann optional noch eine Wassereindüsung (20, W), mit deutlich geringerer Temperatur als die Temperatur der Teildampfmenge (VS3) oder des Abdampfstromes (11'), erfolgen. Die optionale Wassereindüsung (20, W) kann in der zusätzlichen Rohrleitung (14) hinter dem Ventil (15) angeordnet sein.

Entnahmestellen (16.1, 16.2, 16.3,16.4) nach Reaktionsstufen (S1, S2, S3, S4) bei Dampfturbinen (1) sind seit vielen Jahren Stand der Technik und dienen beispielsweise dazu, Teildampfmengen für die regenerative Vorwärmung des Kondensats bzw. Speisewassers zu entnehmen, somit nutzt die Erfindung vorhandene Entnahmestellen (16.1, 16.2, 16.3, 16.4) und lediglich die Rohrleitung (14) hin zum Abdampfstrom (11') bzw. zum Kondensator (13) muss ergänzt werden. Somit ist es möglich, das erfinderische Verfahren auch bei vorhandenen Dampfturbinen (1) nachzurüsten und dabei deren wesentlichen Bestandteile, insbesondere die kostenintensiven Bauteile wie Dampfturbinen-Gehäuse, Rotorwelle (10), Reaktionsstufen (S1, S2, S3, S4) und Endstufenmodul (ESM) sowie deren wirkungsgradoptimierten Auslegungsparameter bei Voll- bzw. Nennlast beizubehalten.

Dieser wirkungsgradoptimierte Betrieb der Dampfturbinen (1) erfordert speziell für diese Anforderungen konstruktiv ausgestaltete Reaktionsstufen (S1, S2, S3, S4), nicht dargestellte Leitschaufeln und insbesondere Endstufenmodule (ESM), was allerdings im erfindungsgemäßen Fall der schwachen und/oder schwankenden Lastbereiche im bisherigen Stand der Technik zu einer Zwangsabschaltung der Dampfturbine (1) führen kann.

Erfindungsgemäß behält die Dampfturbine (1) somit ihre wirkungsgradoptimierte Auslegung für den Voll- bzw. Nennlastbetrieb bei, die insbesondere die Abgabe mechanischer Energie an einen Generator für die Einspeisung von Energie in das externe Stromnetz abdeckt und sieht für Sonderfälle bei schwachen und/oder schwankenden Lastbereichen die Entnahme von Teildampfmengen (VS3) in besonders kritischen Lastzuständen vor.

Zur Identifizierung von besonders kritischen Lastzuständen ist, gemäß diesem Ausführungsbeispiel, nach der Reaktionsstufe (S3) ein für diese Dampfturbine spezifischer Sperrbereich für den Dampfdruck (pS3-Sperr = pS3min bis pS3max) definiert, und dieser wird erfindungsgemäß mit einem während des Betriebs der Dampfturbine (1) an einer Messstelle (12.3) ermittelten Ist-Druck (pS3-Ist) verglichen. Gerät der Ist-Druck (pS3-Ist) aufgrund von Lastschwankungen in den Sperrbereich (pS3-Sperr), wird an der Entnahmestelle (16.3) die Teildampfmenge (VS3) entnommen.

Die Ermittlung von Ist-Druck (pS-Ist) und die Hinterlegung des Sperrbereiches für den Dampfdruck (pS-Sperr) erfolgt mittels einer üblicherweise bei Dampfturbinen (1) bereits vorhandenen Steuer- oder Regeleinrichtungen (18), der Sperrbereich ist hierbei für jeden Dampfturbinentyp sehr spezifisch und kann unterschiedlichste Lastbereiche abdecken.

Entsprechend dem Datenabgleich gibt ein Steuersignal (SS3) die Freigabe, eine Teildampfmenge (VS3) über die zusätzliche Rohrleitung (14) abzuführen. Der entnommene Teildampf (VS3) wird nach der dritten Reaktionsstufe (S3) mittels der Entnahmeleitung (16.3) entnommen; diese ist erfindungsgemäß mit der zusätzlichen Rohrleitung (14) verbunden. Über einstellbare Drosselventile (15) kann die Entnahme von Teildampfmengen (VS3) geregelt werden, wobei hierzu die Absperrarmaturen (19) die Zufuhr zu einer nicht erfindungsrelevanten Vorwärmung des Speisewassers geschlossen ist und wobei das Drosselventil (15) zur erfindungsgemäßen Entnahme eines Teildampfes (VS3) über die zusätzliche Rohrleitung (14) geöffnet ist. Die Teildampfmenge (VS3) wird dann entweder direkt dem Kondensator (13) zugeführt oder zuerst in die bestehende Abdampfleitung (17) und anschließend dem Kondensator (13) zugeführt.

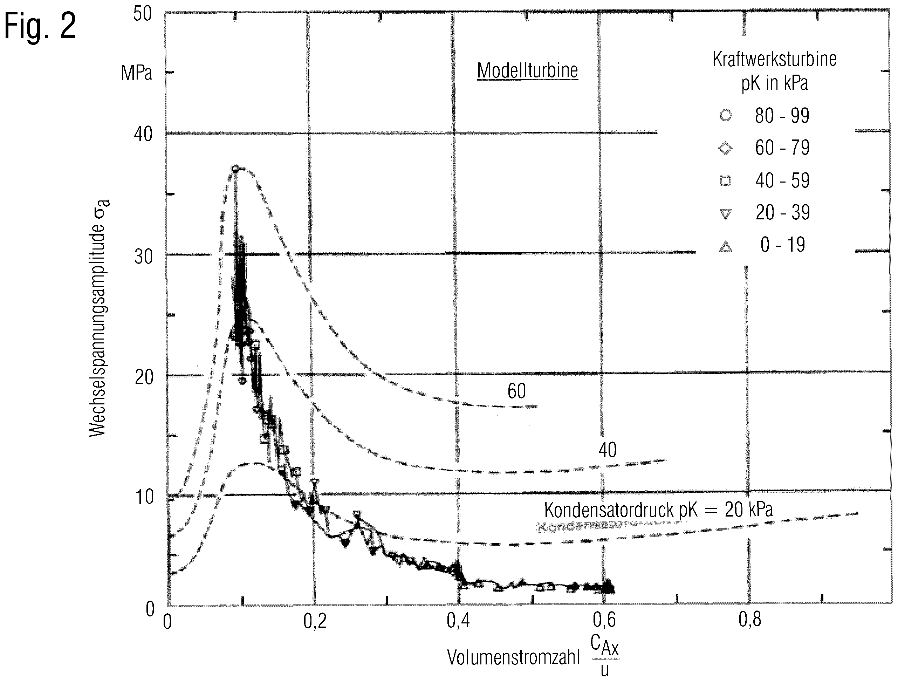

Der Sperrbereich für den Dampfdruck (pS3-Sperr) wird über in der Turbinensteuerung (18) hinterlegte Parameter gesteuert, welcher auf Basis der allseits bekannten Publikation "Darstellung von Wechselspannungsamplituden über den Volumenstrom" von der VGB Kraftwerkstechnik gem. Fig. 2 spezifisch für eine bestimmte Dampfturbine ermittelt wurde.

Ersichtlich wird aus diesem Diagramm der kritische Bereich der Wechselspannungen der Endschaufeln des Endschaufelmoduls (ESM), welche durch Anregung aller relevanten Schwingungsformen infolge der eingangs beschriebenen Strömungsablösungen hervorgerufen wird. Aufgetragen ist die Wechselspannungsamplitude an der Stelle höchster Schaufelbeanspruchung über der Volumenstromzahl, der Bereich des Maximums ist deutlich erkennbar. Dieses exemplarische Diagramm kann für jeden Dampfturbinentyp spezifisch erstellt werden und durch Umrechnung der Parameter kann somit ein Sperrbereich für den Dampfdruck (pS3-Sperr) definiert werden. Das Diagramm zeigt auch auf, dass die zu vermeidenden kritischen Betriebspunkte der Dampfturbine (1) nur einen relativ schmalen Bereich des gesamten Betriebsbereiches ausmachen, zudem nicht ausgeprägt an deren Anfang bzw. Enden liegen und somit wird das Erfordernis die erfindungsgemäßen Lösung sowie deren Vorteile der zielgenauen Identifizierung des Sperrbereichs mit dann angesteuerter Teildampfentnahme (VS3) noch deutlicher. Die Dampfturbine (1) wird in der Praxis mal mehr und mal weniger im gesperrten Bereich betrieben und demnach würde eine Zwangsabschaltung, ohne die erfinderische Lösung, eine nicht zumutbare Unterbrechung des Betriebs oder die eingangs beschriebenen Nachteile in Bezug auf verstärkte Endschaufelmodule (ESM) bedeuten. Die erfinderische Lösung der Identifizierung des gesperrten Bereichs und der dadurch ausgelösten Teildampfentnahme (VS3) lässt jetzt den dauerhaften Betrieb der Dampfturbine (1) zu, unabhängig von schwachen und/oder schwankenden Lastbereichen.

### Bezugszeichenliste

- 1: Dampfturbine
- 10: Welle der Dampfturbine
- 11: Frischdampfstrom
- 11': Abdampfstrom
- 12: Messstelle
- 12.1 - 12.4: Messstelle bei S1 bis S4
- 13: Kondensator
- 14: zusätzliche Rohrleitung
- 15: Drosselventil
- 16.: Entnahme Rohrleitung
- 16.1 - 16.4: Entnahme Rohrleitung bei S1 bis S4
- 17: Abdampfleitung
- 18: Steuer- bzw. Regeleinrichtung
- 19: Absperrarmatur
- 20: Wassereindüsung
- SS: Steuersignal
- SS1 - SS4: Steuersignal bei S1 bis S4
- S: Reaktionsstufen
- S1 - S4: Reaktionsstufen S1 bis S4
- ESM: Endstufenmodul
- p11: Druck des Frischdampfes
- pS: Druck des Dampfes
- pS1 - pS4: Druck des Dampfes bei S1 bis S4
- pS3-Sperr: Sperrbereich für den Druck des Dampfes bei S3
- pS-Ist: Ist-Druck des Dampfes
- pS1 -Ist - pS2-Ist: Ist-Druck des Dampfes bei S1-S4
- pESM: Druck des Abdampfes
- VS: Volumenstrom des Teildampfes
- VS1 - VS4: Volumenstrom des Teildampfes bei S1 bis S4
- A: Anfang des Strömungskanals der Dampfturbine
- B: Ende des Strömungskanals der Dampfturbine
- W: Wasser

## Patentansprüche

1. Verfahren zum Betrieb einer Dampfturbine (1) bei schwankenden Lastbereichen eines Dampf (11) erzeugenden Kraftwerks, mit mindestens einer Reaktionsstufe (S) und mindestens einem nachgelagerten Endstufenmodul (ESM),
wobei die mindestens eine Reaktionsstufe (S) und das Endstufenmodul (ESM) derart mit Dampf (11) beaufschlagt sind, dass sich deren Druck (pS, pESM) nach jeder der mindestens einen Reaktionsstufe (S) und nach dem Endstufenmodul (ESM) verringert,
wobei vor oder nach einer der mindestens einen Reaktionsstufe (S) eine Teildampfmenge (VS) entnommen wird, die unter Umgehung des Endstufenmoduls (ESM) in den Abdampfstrom (11') der Dampfturbine (1) und/oder in einen Kondensator (13) geführt wird.
**dadurch gekennzeichnet,**
**dass** für mindestens eine der Reaktionsstufen (S) ein spezifischer Sperrbereich für den Dampfdruck (pS-Sperr) vor oder nach dieser Reaktionsstufe (S) definiert ist, wobei dieser Sperrbereich (pS-Sperr) nur einen schmalen Bereich des gesamten Betriebsbereichs der Dampfturbine (1) ausmacht und zudem nicht ausgeprägt an dessen Anfang bzw. Ende liegt,
und **dass** über eine Messstelle (12) vor oder nach mindestens einer Reaktionsstufe (S) ein Ist-Druck (pS-Ist) während des Betriebs ermittelt wird,
wobei der Ist-Druck (pS-Ist) derart mit dem spezifischen Sperrbereich für den Dampfdruck (pS-Sperr) verglichen wird, dass die Teildampfmenge (VS) nur dann entnommen wird, wenn der Ist-Druck (pS-Ist) innerhalb des spezifischen Sperrbereiches für den Dampfdruck (pS-Sperr) liegt,
und wobei ein unbegrenzter Betrieb des Endstufenmoduls (ESM) der Dampfturbine (1) bei schwachen und/oder schwankenden Lastbereichen eines Dampf- (1) erzeugenden Kraftwerks ermöglicht wird, indem der Ist-Druck (pS-Ist), durch die infolge des Sperrbereichs (pS-Sperr) definierte Entnahme der Teildampfmenge (VS), soweit außerhalb des Sperrbereichs (pS-Sperr) verringert wird, dass der Betrieb der Dampfturbine (1) außerhalb des Sperrbereichs (pS-Sperr) ohne eine Zwangsabschaltung der Dampfturbine (1) erfolgen kann.

2. Verfahren nach Anspruch 1,
**dadurch gekennzeichnet,**
**dass** mehrere Reaktionsstufen (S1, S2, S3, S4) und das Endstufenmodul (ESM) in Reihe wirken.

3. Verfahren nach Anspruch 1 oder 2,
**dadurch gekennzeichnet,**
**dass** die Messstelle (12) für den Ist-Druck (pS-Ist) und für die Entnahme der Teildampfmenge (VS) jeweils unterschiedlichen Reaktionsstufen (S) zugeordnet werden können.

4. Steuer- oder Regeleinrichtung (18) zur Durchführung eines Verfahrens nach einem der vorherigen Ansprüche bei einer Dampfturbine.

5. Dampfturbine mit mindestens einer Reaktionsstufe (S), mindestens einem nachgelagerten Endstufenmodul (ESM) und einer Steuer- oder Regeleinrichtung nach Anspruch 4, **gekennzeichnet durch** eine Umwegleitung (14), **durch** welche eine Teildampfmenge (VS) an einer der mindestens einen Reaktionsstufe (S) entnehmbar ist.

## Claims

1. A method for operating a steam turbine (1) with fluctuating load ranges of a steam (11) generating power plant, with at least one reaction stage (S) and at least one final stage module (ESM) located downstream, wherein steam (11) is admitted to the at least one reaction stage (S) and the final stage module (ESM) in such a manner that its pressure (pS, pESM) is reduced after each of the at least one reaction stage (S) and after the final stage module (ESM), wherein before or after one of the at least one reaction stage (S) a part steam quantity (VS) is extracted, which, bypassing the final stage module (ESM), is conducted into the waste steam flow (11') of the steam turbine (1) and/or in a condenser (13),
**characterized**
**in that** for at least one of the reaction stages (S) a specific sealing range for the steam pressure (pS-seal) before or after this reaction stage (S) is defined, wherein this sealing range (pS-seal) makes up only a narrow range of the entire operating range of the steam turbine (1) and additionally is not pronounced at the start or end of the same,
and **in that** via a measuring point (12) before or after at least one reaction stage (S) an actual pressure (pS-actual) during the operation is determined,
wherein the actual pressure (pS-actual) is compared with the specific sealing range for the steam pressure (pS-seal) in such a manner that the part steam quantity (VS) is only extracted in particular when the actual pressure (pS-actual) is within the specific sealing range for the steam pressure (pS-seal),
and wherein an unlimited operation of the final stage module (ESM) of the steam turbine (1) with weak and/or fluctuating load ranges of a steam (1) generating power plant is made possible, in that the actual pressure (pS-actual) is reduced through the extraction of the part steam quantity (VS) defined as a consequence of the sealing range (pS-seal) so far outside the sealing range (pS-seal) that the operation of the steam turbine (1) outside the sealing range (pS-seal) can take place without a forced shutdown of the steam turbine (1).

2. The method according to Claim 1, **characterized in that** multiple reaction stages (S1, S2, S3, S4) and the final stage module (ESM) act in series.

3. The method according to Claim 1 or 2, **characterized in that** the measuring point (12) for the actual pressure (pS-actual) and for the extraction of the part steam quantity (VS) can each be assigned to different reaction stages (S).

4. A control or regulating device (18) for carrying out a method according to any one of the preceding claims with a steam turbine.

5. A steam turbine with at least one reaction stage (S), at least one final stage module (ESM) located downstream and a control or regulating device according to Claim 4, **characterized by** a bypass line (14), by way of which a part steam quantity (VS) can be extracted at one of the at least one reaction stage (S).

## Revendications

1. Procédé de fonctionnement d'une turbine à vapeur (1) en présence de plages de charge fluctuantes d'une centrale électrique générant de la vapeur (11), comportant au moins un étage de réaction (S) et au moins un module d'étage final (ESM) positionné en aval, dans lequel au moins un étage de réaction (S) et le module d'étage final (ESM) sont sollicités avec de la vapeur (11) de telle sorte que leur pression (pS, pESM) diminue après chacun d'au moins un étage de réaction (S) et après le module d'étage final (ESM), dans lequel avant ou après un des au moins un étage de réaction (S) une quantité de vapeur partielle (VS) est prélevée, qui est guidée en contournant le module d'étage final (ESM) dans le courant d'échappement de vapeur (11') de la turbine à vapeur (1) et/ou dans un condensateur (13),
**caractérisé en ce que**
pour au moins un des étages de réaction (S), une plage de blocage spécifique pour la pression de vapeur (pS-Sperr) avant ou après cet étage de réaction (S) est définie, dans lequel cette plage de blocage (pS-Sperr) constitue seulement une plage étroite de la plage de fonctionnement totale de la turbine à vapeur (1) et en outre n'est pas située de manière marquée à son début, respectivement sa fin,
et **en ce que** par l'intermédiaire d'un emplacement de mesure (12) avant ou après au moins un étage de réaction (S) une pression effective (pS-Ist) pendant le fonctionnement est déterminée,
dans lequel la pression effective (pS-Ist) est comparée avec la plage de blocage spécifique pour la pression de vapeur (pS-Sperr) de telle sorte que la quantité de vapeur partielle (VS) soit prélevée seulement quand la pression effective (pS-Ist) est située à l'intérieur de la plage de blocage spécifique pour la pression de vapeur (pS-Sperr),
et dans lequel un fonctionnement illimité du module d'étage final (ESM) de la turbine à vapeur (1) est rendu possible en présence de plages de charge faibles et/ou fluctuantes d'une centrale électrique générant une vapeur (1), en diminuant la pression effective (pS-Ist) au moyen du prélèvement de la quantité partielle de vapeur (VS)définie à la suite de la plage de blocage (pS-Sperr), et ainsi qu'à l'extérieur de la zone de blocage (pS-Sperr), **en ce que** le fonctionnement de la turbine à vapeur (1) peut avoir lieu à l'extérieur de la plage de blocage (pS-Sperr) sans une mise hors tension forcée de la turbine à vapeur (1).

2. Procédé selon la revendication 1, **caractérisé en ce que** plusieurs étages de réaction (S1,S2,S3,S4) et le module d'étage final (ESM) agissent en série.

3. Procédé selon la revendication 1 ou 2, **caractérisé en ce que** les emplacements de mesure (12) pour la pression effective (pS-Ist) et pour le prélèvement de la quantité partielle de vapeur (VS) peuvent être coordonnées à des étages de réaction (S) respectivement différents.

4. Dispositif de commande ou de régulation (18) pour mettre en oeuvre un procédé selon une des revendications précédentes sur une turbine à vapeur.

5. Turbine à vapeur comportant au moins un étage de réaction (S), au moins un module d'étage final positionné en aval (ESM) et un dispositif de commande ou de régulation selon la revendication 4, **caractérisé par** une conduite de déviation (14), par l'intermédiaire de laquelle la quantité partielle de vapeur (VS) peut être prélevée sur au moins un étage de réaction (S).
